# EUROPÄISCHE PATENTSCHRIFT

(11) **EP 1 071 001 B1**
(45) Veröffentlichungstag und Bekanntmachung des Hinweises auf die Patenterteilung: **27.10.2004**
(21) Anmeldenummer: 00114470.8
(22) Anmeldetag: 06.07.2000
(51) Int. Cl.: G05B 19/00, G05B 19/042

(54) **Bussystem mit Barcodelesegeräten**
Bus system with barcode readers
Système de bus avec lecteurs de codes à barres

(30) Priorität: 09.07.1999 DE 19931999
(43) Veröffentlichungstag der Anmeldung: 24.01.2001
(73) Patentinhaber: Leuze electronic GmbH + Co KG, 73277 Owen/Teck (DE)
(72) Erfinder: Wörner, Jörg, 73235 Weilheim (DE)
(74) Vertreter: Ruckh, Rainer Gerhard, Dr.

(56) Entgegenhaltungen:
- EP-A- 0 494 695
- DE-A- 4 221 410
- US-A- 5 204 669
- US-A- 5 748 899
- SCHNELL, GERHARD: "Bussysteme in der Automatisierungstechnik" 1994 , VIEWEG , WIESBADEN XP002238251 941014 * Seite 82 - Seite 99 * * Seite 210 - Seite 216 * * Abbildung 2.10 * * Abbildung 2.11B * * Abbildung 2.22 * * Abbildung 2.23 * * Abbildung 4.63 *

## Beschreibung

Die Erfindung betrifft ein Bussystem mit Barcodelesegeräten gemäß dem Oberbegriff des Anspruchs 1.

Eine derartige Anordnung ist aus der DE 92 18 520 bekannt. Die Barcodelesegeräte sind in dieser Anordnung über Busleitungen an die Steuereinheit angeschlossen und bilden mit dieser ein Bussystem. Innerhalb dieses Bussystems werden die Barcodelesegeräte zyklisch von der Steuereinheit unter vorgegebenen Adressen abgefragt.

Die Vergabe einer Adresse eines Barcodelesegerätes erfolgt über eine Steckereinheit am Barcodelesegerät, die zum Anschluß der Busleitungen dient.

Die Steckereinheiten an jedem Barcodelesegerät weisen jeweils eine vorgegebene Anzahl von Anschlußpins auf. Eine ebenfalls vorgegebene Anzahl dieser Anschlußpins dient zur Definition der jeweiligen Adresse des betreffenden Barcodelesegeräts. Hierzu wird aus den für die Adressierung zur Verfügung stehenden Anschlußpins eine vorgegebene Anzahl von Anschlußpins über eine leitende Verbindung zu einem Massepin aktiviert. Je nach dem, welche der Anschlußpins aktiviert sind, ist damit eine spezifische Adresse innerhalb eines vorgegebenen Wertebereichs für das jeweilige Barcodelesegerät vorgesehen.

Nachteilig hierbei ist, daß die jeweilige Adresse eines Barcodelesegeräts über die Hardware der Steuereinheit vorgegeben werden muß. Dies bedingt zum einen einen Eingriff in die Steckereinheit des Barcodelesegerätes, was für die Adressierung des Barcodelesegeräts einen unerwünscht hohen Aufwand bedeutet. Zudem wird durch die Vergabe von Adressen über die Hardware der Steckereinheit die Flexibilität des Bussystems erheblich einschränkt. Eine Änderung der Adressierung von Barcodelesegeräten ist jeweils mit einem konstruktiven Eingriff in das Barcodelesegerät verbunden.

Aus der US-A-5,748,899 ist ein Netzwerk bekannt, bei welchem mehrere Barcodelesegeräte und Workstations an einen Hostrechner angeschlossen sind.

Dem Hostrechner und den Barcodelesegeräten sind jeweils Terminals zugeordnet, welche in geeigneter Weise testbar und konfigurierbar sind. Mit dieser Anordnung ist eine menügeführte Programmierung der Barcodelesegeräte möglich.

Aus der US-A-5,204,669 ist ein Verfahren zur Adresszuweisung in einem Bussystem beschrieben.

Das Bussystem weist mehrere programmierbare Funktionsmodule auf, die über Punkt-zu-Punkt-Verbindungen miteinander verbunden sind und einen seriellen Bus bilden. Die Adressierung wird über einen programmierbaren Controller gesteuert, wobei die Adressvergabe derart erfolgen kann, dass die jeweiligen Adressen der Funktionsmodule deren Positionen innerhalb des Busses entsprechen.

Der Erfindung liegt die Aufgabe zugrunde, für eine Anordnung der eingangs genannten Art eine möglichst einfache und flexible Art der Adressierung zu schaffen.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Ein wesentlicher Vorteil der Erfindung besteht darin, daß die Adressen in den Barcodelesegeräten nicht durch eine Hardwarecodierung oder durch eine Konfiguration mittels einer Einstell-Software vorgegeben werden müssen.

Weiterhin ist vorteilhaft, daß die erfindungsgemäße Anordnung ohne großen Aufwand geändert oder erweitert werden kann. Die Adressen können in derartigen Fällen entsprechend der geänderten Reihenfolge der Barcodelesegeräte auf einfache Weise neu vergeben werden.

Die Erfindung wird im nachstehenden anhand der Zeichnungen erläutert. Es zeigen:
- Fig. 1:: Blockschaltbild einer Anordnung von an eine Steuereinheit angeschlossenen Barcodelesegeräten
- Fig. 2:: Erstes Ausführungsbeispiel einer Schaltungsanordnung eines Barcodelesegeräts zum Anschluß an die Steuereinheit gemäß Figur 1.
- Fig. 3:: Zweites Ausführungsbeispiel einer Schaltungsanordnung eines Barcodelesegeräts zum Anschluß an die Steuereinheit gemäß Figur 1.

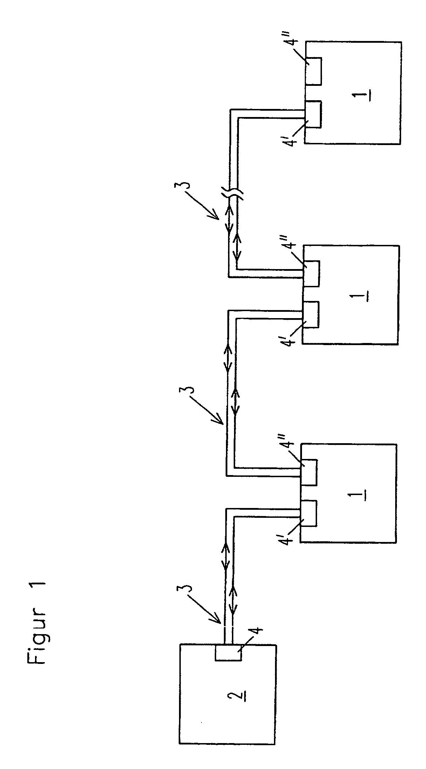

Figur 1 zeigt eine Anordnung von Barcodelesegeräten 1, welche an eine Steuereinheit 2 angeschlossen sind.

Jedes Barcodelesegerät 1, dessen Aufbau in den Zeichnungen nicht dargestellt ist, dient zum Lesen von Barcodes oder ähnlichen Kontrastmarken. Hierzu weist das Barcodelesegerät 1 einen Sendelichtstrahlen emittierenden Sender und einen Empfangslichtstrahlen empfangenden Sender auf. Die Sende- und Empfangslichtstrahlen sind vorzugsweise über eine Ablenkeinheit geführt, welche beispielsweise von einem motorisch getriebenem Polygonspiegelrad gebildet ist.

Durch die Ablenkung am Polygonspiegelrad werden die Sendelichtstrahlen periodisch innerhalb eines vorgegebenen Winkelbereichs geführt, wodurch die Barcodes mit den Sendelichtstrahlen abgetastet werden.

Durch die Kontrastmuster der Barcodes wird den Sendelichtstrahlen eine Amplitudenmodulation aufgeprägt. Die als Empfangslichtstrahlen zurückreflektierten Empfangslichtstrahlen generieren am Ausgang des Empfängers Empfangssignale, welche in einer Auswerteinheit ausgewertet werden. Dort werden die modulierten Empfangssignale decodiert, wodurch das Strichmuster des betreffenden Barcodes rekonstruiert wird.

Derartige Barcodelesegeräte 1 finden insbesondere in industriellen Anlagen wie zum Beispiel Förderanlagen Anwendung. Bei derartigen Applikationen wird üblicherweise eine Vielzahl von Barcodelesegeräten 1 eingesetzt, wobei die räumliche Anordnung der Barcodelesegeräte 1 und die Anzahl der Barcodelesegeräte 1 sich gegebenenfalls ändern kann, beispielsweise wenn der Aufbau der Anlage geändert wird.

Entsprechend den jeweiligen Anforderungen, die sich bei derartigen Applikationen ergeben, werden die Barcodelesegeräte 1 nicht unabhängig voneinander betrieben, sondern von der Steuereinheit 2 gesteuert.

Die Steuereinheit 2 kann von einer SPS-Steuerung oder dergleichen gebildet sein. Die Barcodelesegeräte 1 sind über Zuleitungen 3 an die Steuereinheit 2 angeschlossen. Während des Betriebes der Anordnung werden die Barcodelesegeräte 1 von der Steuereinheit 2 unter vorgegebenen Adressen zyklisch abgefragt, worauf die einzelnen Barcodelesegeräte 1 jeweils eine Rückmeldung über die Zuleitungen 3 an die Steuereinheit 2 ausgeben.

Die gesamte Anordnung bildet dabei ein Bussystem, welches nach dem Master-Slave-Prinzip arbeitet. Die Steuereinheit 2 bildet den Master, während die Barcodelesegeräte 1 die Slaves bilden.

Die Zuweisung der Adressen der Slaves wird vom Master gesteuert und erfolgt während einer Initialisierungsphase, welche vor dem Betrieb des Bussystems durchgeführt wird.

Erfindungsgemäß sind die Barcodelesegeräte 1 in einer Reihe an die Steuereinheit 2 angeschlossen und die Adreßwerte entsprechen den jeweiligen Positionen der Barcodelesegeräte 1 in der Reihe.

Wie aus Figur 1 ersichtlich, sind die Zuleitungen 3 zwischen der Steuereinheit 2 und den Barcodelesegeräten 1 als Zweidrahtleitungen ausgebildet. Derartige Zweidrahtleitungen können beispielsweise bei CAN-Bussystemen oder dergleichen vorgesehen sein. Im vorliegenden Ausführungsbeispiel bestehen die Zweidrahtleitungen aus RS485-Leitungen.

Über diese Zweidrahtleitungen erfolgt der Datenaustausch zwischen der Steuereinheit 2 und den Barcodelesegeräten 1.

Von einem Anschluß 4 an der Steuereinheit 2 werden die Zweidrahtleitungen von der Steuereinheit 2 auf einen Anschluß 4' eines ersten Barcodelesegerätes 1 geführt. Von einem zweiten Anschluß 4'' an diesem Barcodelesegerät 1 werden die Zweidrahtleitungen heraus zu einem zweiten Barcodelesegerät 1 geführt. Hier münden die Zweidrahtleitungen wiederum am ersten Anschluß 4' ein. Am zweiten Anschluß 4'' des Barcodelesegeräts 1 werden wiederum Zweidrahtleitungen heraus zum nächsten Barcodelesegerät 1 geführt. Auf diese Weise werden sämtliche Barcodelesegeräte 1 in einer Reihe über die Zweidrahtleitungen an die Steuereinheit 2 angeschlossen. Dabei weist jedes Barcodelesegerät 1 zwei Anschlüsse 4', 4'' zum Anschluß der Zweidrahtleitungen auf. An jedem der Anschlüsse 4', 4'' werden jeweils Daten von dem benachbarten Barcodelesegerät oder der Steuereinheit 2 Daten eingelesen bzw. an diese Einheiten Daten ausgelesen. Die Anschlüsse 4, 4', 4'' an der Steuereinheit 2 und an den Barcodelesegeräten 1 sind dabei identisch ausgebildet.

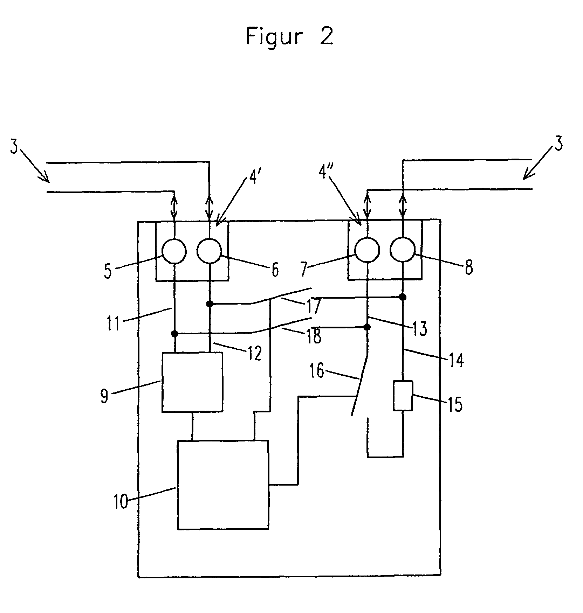

Figur 2 zeigt ein erstes Ausführungsbeispiel einer Schaltungsanordnung eines Barcodelesegeräts 1 zum Anschluß der Zweidrahtleitungen. Die Schaltungsanordnung umfaßt die beiden Anschlüsse 4', 4'' mit jeweils zwei Anschlußpins 5, 6, sowie 7, 8 für den Anschluß der Zweidrahtleitungen. Zudem ist eine eine Schnittstelleneinheit bildende Sende-/Empfangseinheit 9 vorgesehen, welche die eingelesenen Daten empfängt und Daten auf die Zweidrahtleitungen ausgibt. Im vorliegenden Beispiel ist die Sende-/Empfangseinheit 9 als RS485-Schnittstelleneinheit ausgebildet. Diese Sende-/Empfangseinheit 9 ist an eine Rechnsreinheit 10 angeschlossen, welche vorzugsweise von der Auswerteeinheit des Barcodelesegeräts 1 gebildet ist oder in dieser integriert ist.

Die Anschlußpins 5, 6 des ersten Anschlusses 4' sind direkt über jeweils eine Leitung 11, 12 an die Sende-/Empfangseinheit 9 angeschlossen. Die Anschlußpins 7, 8 des zweiten Anschlusses 4'' sind über Leitungen 13, 14 sowie einen Widerstand 15 und einen Schalter 16 zur Rechnereinheit 10 geführt. Der Widerstand 15 dient bei dessen Aktivierung über den Schalter 16 als Abschlußwiderstand des Bussystems.

Die von den Anschlußpins 5 - 8 weggeführten Leitungen 11 - 14 sind paarweise jeweils über eine Verbindungsleitung mit einem Schalter 17, 18 gekoppelt. Diese Schalter 17, 18 sind vorzugsweise als Relais ausgebildet und sind über die Rechnereinheit 10 aktivierbar.

Über die Verbindungsleitungen mit den Schaltern 17, 18 sind die am ersten Anschluß 4' einmündenden und die am zweiten Anschluß 4'' ausmündenden Zuleitungen 3 paarweise gekoppelt.

Bei Beginn der Initialisierungsphase sind zunächst sämtliche Schalter 17, 18 in den Verbindungsleitungen der einzelnen Barcodelesegeräte 1 geöffnet. Auch die zur Aktivierung der Abschlußwiderstände vorgesehenen Schalter 16 sind geöffnet.

Zur Vergabe der einzelnen Adressen wird in der Steuereinheit 2 fortlaufend ein Zähler inkrementiert, wobei diese Zählerstände die Adreßwerte bilden, welche den einzelnen Barcodelesegeräten 1 zugewiesen werden. Vorteilhafterweise nimmt der Zähler zunächst den Zählerstand eins ein. Dieser Wert wird als Adreßwert über die Zweidrahtleitungen in die Rechnereinheit 10 des ersten Barcodelesegeräts 1, welches unmittelbar mit der Steuereinheit 2 verbunden ist, eingelesen.

In der Rechnereinheit 10 des Barcodelesegeräts 1 wird zudem registriert, daß die Schalter 17, 18 in den Verbindungsleitungen noch geöffnet sind. Aufgrund dessen wird der von der Steuereinheit 2 eingelesene Wert eins als Adreßwert in der Rechnereinheit 10 übernommen und abgespeichert. Zudem wird eine Rückmeldung an die Steuereinheit 2 ausgesendet. Schließlich werden nach erfolgter Adreßvergabe über die Rechnereinheit 10 die Schalter 17, 18 in den Verbindungsleitungen geschlossen.

Nachdem die Steuereinheit 2 die Rückmeldung von dem ersten Barcodelesegerät 1 erhalten hat, wird in der Steuereinheit 2 der Zählerstand des Zählers vom Wert eins auf den Wert zwei erhöht. Dieser Wert wird als neuer zu vergebender Adreßwert auf die Zweidrahtleitungen ausgegeben. Zuerst wird der neue Adreßwert wieder in die Rechnereinheit 10 des ersten Barcodelesegeräts eingelesen. Da diesem Barcodelesegerät 1 bereits eine Adresse zugewiesen wurde und die Schalter 17, 18 der Verbindungsleitungen geschlossen sind, wird der Adreßwert über eine Verbindungsleitung und über den zweiten Anschluß 4'' auf die Zweidrahtleitungen ausgegeben und in das hinter diesem Barcodelesegerät 1 angeschlossene nächste Barcodelesegerät 1 eingelesen.

Dort wird der zu vergebende Adreßwert über die Sende-/Empfangseinheit 9 in die Rechnereinheit 10 eingelesen. Da für dieses Barcodelesegerät 1 noch kein Adreßwert in der Rechnereinheit 10 gespeichert ist und demzufolge auch die Schalter 17, 18 der Verbindungsleitungen noch geöffnet sind, wird der Wert zwei als neuer Adreßwert in der Rechnereinheit 10 des zweiten Barcodelesegerätes 1 gespeichert. Dann wird wieder eine Rückmeldung von diesem Barcodelesegerät 1 an die Steuereinheit 2 gesendet. Zudem werden die Schalter 17, 18 in den Verbindungsleitungen geschlossen.

Auf die Rückmeldung vom zweiten Barcodelesegerät 1 wird in der Steuereinheit 2 der Zähler auf den Zählerstand drei erhöht. Dieser Adreßwert wird dann durch die ersten beiden Barcodelesegeräte 1 über die geschlossenen Schalter 17, 18 der jeweiligen Verbindungsleitungen bis zum dritten Barcodelesegerät 1 durchgeschleust. Dort wird der Wert drei als Adreßwert gespeichert.

Auf diese Weise werden sämtliche Barcodelesegeräte 1 entsprechend ihrer Reihenfolge in welcher diese an die Steuereinheit 2 angeschlossen sind, adressiert.

Alternativ zu dem beschriebenen Verfahren können prinzipiell die Adreßwerte auch von den Rechnereinheiten 10 der einzelnen Barcodelesegeräte 1 hochgezählt werden. In diesem Fall entspricht die Adressierung weitgehend dem sogenannten Daisy-Chain-Verfahren.

Die Vergabe der Adressen erfolgt so lange, bis das letzte an die Steuereinheit 2 angeschlossene Barcodelesegerät 1 adressiert wurde. Wie aus Figur 1 ersichtlich ist, ist beim letzten Barcodelesegerät 1 in der Reihe der zweite Anschluß 4'' unbesetzt. Wird von der Steuereinheit 2 der Zähler weiter inkrementiert, so erfolgt über den zweiten unbelegten Anschluß des letzten Barcodelesegeräts 1 keine Rückantwort mehr. Dies wird in der Steuereinheit 2 registriert, worauf an das letzte noch adressierte Barcodelesegerät 1 ein Befehl ausgesendet wird, mittels dessen der Abschlußwiderstand in diesem Barcodelesegerät 1 durch Betätigen des zugeordneten Schalters 16 über die Rechnereinheit 10 aktiviert wird.

Bei dieser Anordnung erfolgt somit nicht nur die Adreßvorgabe automatisch entsprechend der Reihenfolge der Barcodelesegeräte 1 relativ zur Rechnereinheit 2, vielmehr wird auch der Abschlußwiderstand des Bussystems automatisch aktiviert. Ein manueller Anschluß des Abschlußwiderstands entfällt somit.

Figur 2 zeigt ein zweites Ausführungsbeispiel einer Schaltungsanordnung eines Barcodelesegerätes 1 an das Bussystem.

Der Aufbau dieser Anordnung entspricht im wesentlichen der Schaltungsanordnung gemäß Figur 2. Im Unterschied zur Schaltungsanordnung gemäß Figur 2 sind in diesem Ausführungsbeispiel zwei Sende-/Empfangseinheiten 9a, 9b vorgesehen, welche jeweils an die Rechnereinheit 10 angeschlossen werden.

Die Anschlußpins 5, 6 des ersten Anschlusses 4' sind über die ersten Leitungen 11, 12 an die erste Sende-/Empfangseinheit 9a angeschlossen. Die Anschlußpins 7, 8 des zweiten Anschlusses 4'' sind über die zweiten Leitungen 13, 14 an die zweite Sende-/Empfangseinheit (9b) angeschlossen. Zwischen den ersten und zweiten Leitungen 11 - 14 verlaufen Verbindungsleitungen, welche paarweise jeweils eine erste Leitung 11, 12 und eine zweite Leitung 13, 14 miteinander verbinden. In jeder Verbindungsleitung ist wiederum jeweils ein Schalter 17, 18 vorgesehen, welcher über die Rechnereinheit 10 betätigbar ist.

Die Adressierung der einzelnen Barcodelesegeräte 1 erfolgt analog zu dem Ausführungsbeispiel gemäß Figur 2.

Zudem wird bei geschlossenen Schaltern 17, 18 in den Verbindungsleitungen in der Rechnereinheit 10 geprüft, ob die Ausgangssignale der Sende/Empfangseinheiten 9a, 9b jeweils gleich sind. Hiermit kann die Funktionsfähigkeit der Schalter 17, 18 überprüft werden.

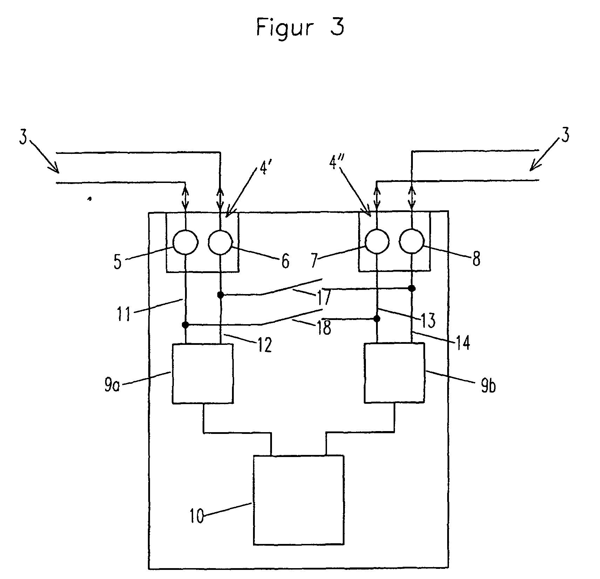

Analog zum Ausführungsbeispiel gemäß Figur 2 kann auch bei der Schaltungsanordnung gemäß Figur 3 zusätzlich ein nicht dargestellter, zuschaltbarer Abschlußwiderstand vorgesehen sein.

## Patentansprüche

1. Bussystem mit Barcodelesegeräten, wobei die Barcodelesegeräte über Zuleitungen an eine Steuereinheit angeschlossen sind und von dieser jeweils unter einer Adresse abfragbar sind, **dadurch gekennzeichnet, daß** die Barcodelesegeräte (1) in einer Reihe an die Steuereinheit (2) angeschlossen sind, wobei hierzu jedes Barcodelesegerät Schalter (17, 18) aufweist, mittels derer die in das Barcodelesegerät (1) einlaufenden und aus diesen herausgeführten Zuleitungen gekoppelt sind, und welche über eine Rechnereinheit (10) betätigbar sind, und dass zur Vergabe der Adressen aus der Steuereinheit (2) Adresswerte nacheinander in die Barcodelesegeräte (1) eingelesen werden, wobei der jeweilige Adresswert in der Rechnereinheit (10) eines Barcodelesegerätes (1) gespeichert wird, bei welcher die ein- und auslaufenden Zuleitungen durch geöffnete Schalter (17, 18) entkoppelt sind, und wobei nach Abspeichern des Adresswertes die Schalter (17, 18) über die Rechnereinheit (10) geschlossen werden.

2. Bussystem nach Anspruch 1, **dadurch gekennzeichnet, dass** die Adresswerte der einzelnen Barcodelesegeräte (1) deren Positionen innerhalb der Reihe entsprechen.

3. Bussystem nach Anspruch 2, **dadurch gekennzeichnet, daß** die Adressen den Barcodelesegeräten (1) während einer Initialisierungsphase zugewiesen werden.

4. Bussystem nach einem der Ansprüche 1 - 3, **dadurch gekennzeichnet, daß** das Bussystem nach dem Master-Slave-Prinzip arbeitet, wobei die Steuereinheit (2) den Master und die Barcodelesegeräte (1) die Slaves bilden.

5. Bussystem nach einem der Ansprüche 1 - 4, **dadurch gekennzeichnet, daß** die Zuleitungen (3) von Zweidrahtleitungen gebildet sind.

6. Bussystem nach Anspruch 5, **dadurch gekennzeichnet, daß** die Zweidrahtleitungen von RS485-Leitungen oder von Busleitungen eines CAN-Bussystems gebildet sind.

7. Bussystem nach einem der Ansprüche 5 oder 6, **dadurch gekennzeichnet, daß** jedes Barcodelesegerät (1) jeweils einen Anschluß (4', 4'') für in das Barcodelesegerät (1) einlaufende und aus diesem ausmündende Zweidrahtleitungen aufweist.

8. Bussystem nach Anspruch 7, **dadurch gekennzeichnet, daß** jedes Barcodelesegerät (1) wenigstens eine Sende-/Empfangseinheit (9) aufweist, welche an die Rechnereinheit (10) angeschlossen ist, und daß die in das Barcodelesegerät (1) einlaufenden und aus diesem herausgeführten Zweidrahtleitungen über die Sende-/Empfangseinheit (9) geführt und über die Schalter (17, 18) gekoppelt sind.

9. Bussystem nach einem der Ansprüche 1 - 8, **dadurch gekennzeichnet, daß** die Schalter (17, 18) von Relais gebildet sind.

10. Bussystem nach einem der Ansprüche 5 - 9, **dadurch gekennzeichnet, daß** an den aus einem Barcodelesegerät (1) herausgeführten Zweidrahtleitungen ein Widerstand (15) mit einem Schalter (16) angeschlossen ist, welcher über die Rechnereinheit (10) betätigbar ist.

11. Bussystem nach einem der Ansprüche 8 - 10, **dadurch gekennzeichnet, daß** jedes Barcodelesegerät (1) zwei Sende-/Empfangseinheiten (9a, 9b) aufweist, wobei die in das Barcodelesegerät (1) einlaufenden und aus diesem herausgeführten Zweidrahtleitungen jeweils an eine Sende-/Empfangseinheit (9a, 9b) angeschlossen sind.

12. Bussystem nach Anspruch 11, **dadurch gekennzeichnet, daß** zur Kontrolle der Schalter (17, 18), die zwischen den auf die Sende-/Empfangseinheiten (9a, 9b) geführten Zweidrahtleitungen geschaltet sind, in der Rechnereinheit (10) überprüft wird, ob bei geschlossenen Schaltern (17, 18) die Ausgangssignale der Sende-/Empfangseinheiten identisch sind.

13. Bussystem nach einem der Ansprüche 1 - 12, **dadurch gekennzeichnet, daß** zur Vergabe der Adressen in der Steuereinheit (2) ein Zähler fortlaufend inkrementiert wird, wobei die die Adreßwerte bildenden Zählerstände einzeln nacheinander in die Barcodelesegeräte (1) eingelesen werden.

14. Bussystem nach einem der Ansprüche 9 - 12, **dadurch gekennzeichnet, daß** der dem Widerstand (15) zugeordnete Schalter (16) eines Barcodelesegeräts (1) über die Rechnereinheit (10) geschlossen wird, falls nach Einlesen eines Adreßwertes und Ausgabe dieses Adreßwerts über die aus diesem Barcodelesegerät herausgeführten Zweidrahtleitungen keine Rückmeldung empfangen wird.

## Claims

1. Bus system with bar code readers, wherein the bar code readers are connected by way of feed lines with a control unit and can be respectively interrogated by this under an address, **characterised in that** the bar code readers (1) are connected in series with the control unit (2), wherein for this purpose each bar code reader comprises switches (17, 18) by means of which the feed lines running into the bar code reader (1) and led out of this are coupled and which are actuable by way of a computer unit (10), and that for the allocation of the addresses address values are read in succession from the control unit (2) into the bar code readers (1), wherein the respective address value is stored in the computer unit (10) of a bar code reader (1) in which the feed lines running in and running out are decoupled by opened switches (17, 18) and wherein after storage of the address value the switches (17, 18) are closed by way of the computer unit (10).

2. Bus system according to claim 1, **characterised in that** the address values of the individual bar code readers (1) correspond with the positions thereof within the series.

3. Bus system according to claim 2, **characterised in that** the addresses of the bar code readers (1) are allocated during an initialisation phase.

4. Bus system according to one of claims 1 to 3, **characterised in that** the bus system operates according to the master/slave principle, wherein the control unit (2) forms the master and the bar code readers (1) form the slaves.

5. Bus system according to one of claims 1 to 4, **characterised in that** the feed lines (3) are formed by two-wire lines.

6. Bus system according to claim 5, **characterised in that** the two-wire lines are formed by RS485 lines or by bus lines of a CAN bus system.

7. Bus system according to one of claims 5 and 6, **characterised in that** each bar code user (1) has a respective connection (4, 4") for two-wire lines running into the bar code reader (1) and exiting from this.

8. Bus system according to claim 7, **characterised in that** each bar code reader (1) comprises at least one transmitter/receiver unit (9) connected with the computer unit (10) and that the two-wire lines running into the bar code reader (1) and led out of this are led by way of the transmitter/receiver unit (9) and coupled by way of the switches (17, 18).

9. Bus system according to one of claims 1 to 8, **characterised in that** the switches (17, 18) are formed by relays.

10. Bus system according to one of claims 5 to 9, **characterised in that** a resistor (15) with a switch (16), which is actuable by way of the computer unit (10), is connected with the two-wire lines led out of a bar code reader (1).

11. Bus system according to one of claims 8 to 10, **characterised in that** each bar code reader (1) comprises two transmitter/receiver units (9a, 9b), wherein the two-wire lines running into the bar code reader (1) and led out of this are each connected with a respective transmitter/receiver unit (9a, 9b).

12. Bus system according to claim 11, **characterised in that** for checking the switches (11, 18) connected between the two-wire lines led to the transmitter/receiver units (9a, 9b) it is checked in the computer unit (10) whether the output signals of the transmitter/receiver unit are identical when the switches (17, 18) are closed.

13. Bus system according to one of claims 1 to 12, **characterised in that** for allocation of the addresses a counter is continuously incremented in the control unit (2), wherein the counter states forming the address values are individually read in succession into the bar code readers (1).

14. Bus system according to one of claims 9 to 12, **characterised in that** the switch (16), which is associated with the resistor (15), of a bar code reader (1) is closed by way of a computer unit (10) if after reading-in an address value and output of this address value no acknowledgement is received by way of the two-wire lines led out of this bar code reader.

## Revendications

1. Système de bus avec lecteurs de codes à barres, dans lequel les lecteurs de codes à barres sont raccordés à une unité de commande par des lignes d'amenée et peuvent être interrogés chacun par cette dernière sous une adresse, **caractérisé en ce que** les lecteurs de codes à barres (1) sont branchés dans une rangée à l'unité de commande (2), sachant que chaque lecteur de codes à barres comporte pour cela des commutateurs (17, 18) à l'aide desquels les lignes d'amenée entrant dans le lecteur de codes à barres (1) et sortant de ce dernier sont couplées, et qui peuvent être actionnés par l'intermédiaire d'une unité de calcul (10), et **en ce que**, pour l'allocation des adresses, des valeurs d'adresses sont lues l'une après l'autre depuis l'unité de commande (2) dans les lecteurs de codes à barres (1), sachant que la valeur d'adresse respective est enregistrée dans l'unité de calcul (10) d'un lecteur de codes à barres (1), sur laquelle les lignes d'amenées entrantes et sortantes sont découplées par des commutateurs (17, 18) ouverts, et sachant que, après l'enregistrement de la valeur d'adresse, les commutateurs (17, 18) sont fermés par l'intermédiaire de l'unité de calcul (10).

2. Système de bus selon la revendication 1, **caractérisé en ce que** les valeurs d'adresse des différents lecteurs de codes à barres (1) correspondent à leur position à l'intérieur de la rangée.

3. Système de bus selon la revendication 2, **caractérisé en ce que** les adresses sont allouées aux lecteurs de codes à barres (1) pendant une phase d'initialisation.

4. Système de bus selon l'une quelconque des revendications 1 - 3, **caractérisé en ce que** le système de bus fonctionne d'après le principe maître-esclave, sachant que l'unité de commande (2) forme le maître et les lecteurs de codes à barres (1) les esclaves.

5. Système de bus selon l'une quelconque des revendications 1 à 4, **caractérisé en ce que** les lignes d'amenée (3) sont formées de lignes à deux fils.

6. Système de bus selon la revendication 5, **caractérisé en ce que** les lignes à deux fils sont formées par des lignes RS 485 ou par des lignes de bus d'un système de bus CAN

7. Système de bus selon l'une des revendications 5 ou 6, **caractérisé en ce que** chaque lecteur de codes à barres (1) comporte respectivement un branchement (4', 4") pour des lignes à deux fils entrant dans le lecteur de codes à barres (1) et sortant de ce dernier.

8. Système de bus selon la revendication 7, **caractérisé en ce que** chaque lecteur de codes à barres (1) comporte au moins une unité émettrice/réceptrice (9), laquelle est branchée à l'unité de calcul (10), et **en ce que** les lignes à deux fils entrant dans le lecteur de codes à barres (1) et sortant de ce dernier sont conduites à travers l'unité émettrice/réceptrice (9) et sont couplées par l'intermédiaire des commutateurs (17, 18).

9. Système de bus selon l'une quelconque des revendications 1 - 8, **caractérisé en ce que** les commutateurs (17, 18) sont formés par des relais.

10. Système de bus selon l'une quelconque des revendications 5 - 9, **caractérisé en ce qu'**une résistance (15), avec un commutateur (16) qui peut être actionné par l'intermédiaire de l'unité de calcul (10), est branchée sur les lignes à deux fils sorties d'un lecteur de codes à barres (1).

11. Système de bus selon l'une quelconque des revendications 8 - 10, **caractérisé en ce que** chaque lecteur de codes à barres (1) comporte deux unités émettrices/réceptrices (9a, 9b), sachant que les lignes à deux fils entrant dans le lecteur de codes à barres (1) et sortant de ce dernier sont branchées chacune à une unité émettrice/réceptrice (9a, 9b).

12. Système de bus selon la revendication 11, **caractérisé en ce que**, pour le contrôle des commutateurs (17, 18) qui sont montés entre les lignes à deux fils amenées sur les unités émettrices/réceptrices (9a, 9b), il est contrôlé dans l'unité de calcul (10) si, les commutateurs (17, 18) étant fermés, les signaux de sortie des unités émettrices/réceptrices sont identiques.

13. Système de bus selon l'une quelconque des revendications 1 - 12, **caractérisé en ce que**, pour l'allocation des adresses, un compteur est incrémenté en permanence dans l'unité de commande (2), sachant que les positions du compteur formant les valeurs d'adresse sont lues séparément l'une après l'autre dans les lecteurs de codes à barres (1).

14. Système de bus selon l'une quelconque des revendications 9 - 12, **caractérisé en ce que** le commutateur (16) d'un lecteur de codes à barres (1), commutateur affecté à la résistance (15), est fermé par l'intermédiaire de l'unité de calcul (10) si, après la lecture d'une valeur d'adresse et la sortie de cette valeur d'adresse par l'intermédiaire des lignes à deux fils sorties de ce lecteur de codes à barres, aucun message en retour n'est reçu.
